# EUROPÄISCHE PATENTSCHRIFT

(11) **EP 2 934 801 B1**
(45) Veröffentlichungstag und Bekanntmachung des Hinweises auf die Patenterteilung: **01.07.2020**
(21) Anmeldenummer: 13821107.3
(22) Anmeldetag: 20.12.2013
(51) Int. Cl.: B23B 31/117, B23B 31/20, B23B 31/30

(54) **WERKZEUGHALTER UND ZERSPANWERKZEUG MIT DÄMPFUNGSSYSTEM**
TOOL HOLDER AND MACHINING TOOL WITH DAMPING SYSTEM
PORTE-OUTIL ET OUTIL D'USINAGE AVEC SYSTÈME D'AMORTISSEMENT

(30) Priorität: 21.12.2012 DE 102012025075; 21.05.2013 DE 102013105171
(43) Veröffentlichungstag der Anmeldung: 28.10.2015
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Schwarz, Wolfgang
(86) Internationale Anmeldenummer: PCT/EP2013/077737
(87) Internationale Veröffentlichungsnummer: WO 2014/096380

(56) Entgegenhaltungen:
- WO-A1-01/60556
- DE-U1- 9 115 854
- DE-U1- 29 603 751
- DE-U1-202006 002 763

## Beschreibung

Die Erfindung betrifft einen Werkzeughalter gemäß dem Oberbegriff der Patentansprüche 1 und 2, für ein um eine Drehachse drehbares Werkzeug, insbesondere in Form eines Bohrers, eines Fräsers oder eines Reibwerkzeugs. Es ist bekannt, den Schaft eines solchen Werkzeugs in einer zentrischen Aufnahmeöffnung einer ringförmigen, in sich geschlossenen, meist als Hülsenpartie ausgeführten Partie eines Werkzeughalters mittels Presssitz zu halten. Diese Hülsenpartie bildet das werkzeugseitige Ende eines Werkzeughalters ansonsten üblicher Bauart.

Die Erfindung betrifft weiterhin ein Zerspanwerkzeug gemäß dem Oberbegriff der Patentansprüche 16 und 17.

Ein derartiger Werkzeughalter und ein derartiges Zerspanwerkzeug gehen beispielsweise aus der DE 296 03 751 U1 hervor.

Die besagte Partie bzw. Hülsenpartie des Werkzeughalters kann durch Erwärmen so weit in radialer Richtung aufgeweitet werden, dass der kalte Schaft des Werkzeugs in die Hülsenpartie eingeschoben oder aus ihr herausgezogen werden kann. Sobald die Hülsenpartie wieder abgekühlt ist, stellt sich zwischen ihr und dem Schaft des Werkzeugs ein Pressverbund ein, mittels dem das Werkzeug zuverlässig in dem Werkzeughalter festgehalten wird (Schrumpftechnologie, vgl. etwa EP 1 353 768 B1).

Alternativ kann auch hydraulisch eingespannt werden. Zu diesem Zweck ist innerhalb der besagten Hülsenpartie des Werkzeughalters ein hydraulisches Spannorgan angeordnet, welches bei Beaufschlagung mit hydraulischem Druck seinen den Werkzeugschaft umgreifenden Innendurchmesser verringert und so den Werkzeugschaft reibschlüssig einspannt.

Als dritte Alternative besteht die Möglichkeit, die zum sicheren, reibschlüssigen Einspannen des Werkzeugschafts erforderliche Pressung auch auf rein mechanischem Wege aufzubringen, etwa mittels Zangenspannfuttern gemäß DIN ISO 15488 oder EP 1 291 103 oder Rollenspannfuttern gemäß DE 35 172 46.

Spannfutter der beschriebenen Art haben sich in der Praxis sehr bewährt.

Generell besteht bei Spannfuttern der beschriebenen Art das Problem, dass unter ungünstigen Umständen auf Grund der Reaktionskräfte, die von den Schneiden des Werkzeugs ausgehen, welche schnell wechselnden Beanspruchungen ausgesetzt sind, Schwingungen angeregt werden, die nicht selten im oder nahe am Resonanzbereich liegen. Diese Schwingungen können sich im Gesamtsystem aus Werkzeug, Spannfutter und Werkzeugmaschine so stark bemerkbar machen, dass die Schnittgeschwindigkeit und/oder der Vorschub verringert werden müssen, was die Leistungsfähigkeit des konkreten Systems beeinträchtigt und daher unerwünscht ist.

Es ist bekannt, dass sich die Schwingungsneigung eines solchen Gesamtsystems in manchen Fällen dadurch positiv beeinflussen lässt, dass das Werkzeug "weicher" eingespannt wird.

Es ist nun die Aufgabe der vorliegenden Erfindung, ein Mittel anzugeben, das eine das Schwingungsverhalten des Werkzeugs besonders günstig beeinflussende Einspannung des Werkzeugs ermöglicht, ohne Kompromisse bei der Bearbeitungspräzision einzugehen.

Eine erste erfindungsgemäße Lösungsalternative für die genannte Aufgabe besteht aus einem Werkzeughalter gemäß Patentanspruch 1 mit einer Werkzeugaufnahme zum reibschlüssigen Einspannen eines Werkzeugschafts, wobei die Werkzeugaufnahme aus mehreren voneinander beabstandeten, ringförmigen Spannflächen besteht, die dazu bestimmt sind, den Werkzeugschaft im Presssitz zu halten, und die am Innenumfang einer Hülsenpartie ausgebildet sind, wobei die Hülsenpartie eine Materialaussparung zur Beeinflussung ihrer Spannwirkung besitzt. Die besagte Materialaussparung wird durch mehrere in Umfangsrichtung verlaufende, ringförmige Kanäle gebildet, die von der Werkzeugaufnahme jeweils durch einen federnden Wandabschnitt abgetrennt sind, welcher auf seiner dem Kanal abgewandten Seite die jeweilige Spannfläche ausbildet. Die in radialer Richtung gemessene Tiefe des jeweiligen Kanals ist sehr gering und zwar < 0,1 mm. Auf diese Art und Weise verhält sich der federnde Wandabschnitt zunächst ausgesprochen weich, was insbesondere im Zusammenspiel mit der Orientierung der Kanäle in Umfangsrichtung das Schwingungsverhalten sehr günstig beeinflusst. Dennoch hat die Konstruktion keine zu weiche Charakteristik, da sich der federnde Wandabschnitt bei steigender Belastung frühzeitig an dem in radialer Richtung dahinterliegenden Hülsenabschnitt abstützt und dann eine wesentlich robustere Charakteristik zeigt.

Überraschenderweise hat sich gezeigt, dass ringförmige Kanäle, die in Umfangsrichtung in der Hülsenpartie verlaufen und idealerweise "endlos" sind bzw. keine Unterbrechungen aufweisen, anderen Strukturen überlegen sind, wie z.B. einer Anzahl von Bohrungen, die in Richtung parallel zur Rotationsachse in die Hülsenpartie eingebracht worden sind. Dies unter anderem deshalb, weil solche Strukturen, wie die soeben genannten Bohrungen, parallel zur Rotationsachse dazu führen, dass die Steifigkeit des so behandelten Werkzeughalters gegenüber einer aus einer bestimmten Richtung radial angreifenden Kraft von der aktuellen Drehposition des Werkzeughalters abhängt, was in manchen Einsatzfällen - abhängig von der aktuellen Last und Drehzahl - sogar schwingungsanregend wirken kann.

Darüber hinaus hat sich ebenso überraschend herausgestellt, dass simple Nuten, die von der Seite der Werkzeugaufnahme her eingestochen und daher zur Seite der Werkzeugaufnahme hin offen sind, nur eine signifikant schwächere Beeinflussung der Einspanncharakteristik zu bewirken vermögen als die erfindungsgemäßen Kanäle, die im Inneren der Hülsenpartie liegen und gegenüber der Werkzeugaufnahme völlig abgeschlossen sind.

Eine zweite erfindungsgemäße Lösungsalternative für die genannte Aufgabe besteht aus einem Werkzeughalter gemäß Patentanspruch 2 mit einer Werkzeugaufnahme zum reibschlüssigen Einspannen eines Werkzeugschafts, wobei die Werkzeugaufnahme aus mindestens einer wendelförmigen Spannfläche besteht, die dazu bestimmt ist, den Werkzeugschaft im Presssitz zu halten, und die am Innenumfang einer Hülsenpartie ausgebildet ist, wobei die Hülsenpartie eine Materialaussparung zur Beeinflussung ihrer Spannwirkung besitzt. Die besagte Materialaussparung wird durch mindestens einen im Wesentlichen in Umfangrichtung entlang einer Schraubenlinie verlaufenden Kanal ausgebildet, der von der Werkzeugaufnahme durch einen federnden Wandabschnitt abgetrennt ist, welcher auf seiner dem Kanal abgewandten Seite die jeweilige Spannfläche ausbildet. Vorzugsweise windet sich der Kanal in Umfangsrichtung mehrfach, idealerweise mindestens dreifach um die Werkzeugaufnahmeöffnung herum. Statt eines einzigen Kanals können auch mehrere Kanäle vorhanden sein, die dann sozusagen ein mehrgängiges Gewinde in der Hülsenpartie ausbilden.

Auch eine solche gewindeartige Anordnung führt dazu, dass die Steifigkeit des so ausgestalteten Werkzeughalters gegenüber einer aus einer bestimmten Richtung radial angreifenden Kraft nicht signifikant von der aktuellen Drehposition des Werkzeughalters abhängt, wobei hier insbesondere von Vorteil ist, dass sich die Steifigkeit des Werkzeughalters im Laufe seiner Rotation nicht sprungartig ändert.

Winkel a, der an die Mittellängsachse der Schraubenlinie angelegten Tangente, entlang derer der Kanal umläuft, und der Achse, um die der Werkzeughalter bestimmungsgemäß rotiert, ist, in Projektion der besagten Geraden aufeinander, vorteilhafterweise > 60°.

Eine bevorzugte Ausführungsform der Erfindung zeichnet sich dadurch aus, dass der federnde Wandabschnitt in radialer Richtung dünnwandig ist und vorzugsweise eine Wandstärke < 2 mm, idealerweise < 1 mm besitzt. Dies verleiht dem federnden Wandabschnitt eine Elastizität, die sich besonders vorteilhaft auf das Schwingungsverhalten auswirkt - insbesondere dann, wenn die Möglichkeit besteht, dass der federnde Wandabschnitt unter dem Einfluss der im Betrieb auftretenden Kräfte nur ein bestimmtes Stück weit in radialer Richtung nachgibt und sich dann an dem in radialer Richtung dahinterliegenden Hülsenabschnitt abstützt, sozusagen "auf Block" geht. Dies verhindert, dass die Einspannung des Werkzeugschafts zu weich wird, um allen im Betrieb auftretenden Belastungen gewachsen zu sein.

Im Rahmen einer anderen bevorzugten Ausführungsform ist vorgesehen, dass die von dem federnden Wandabschnitt, welcher den Kanal von der Werkzeugaufnahme abtrennt, überspannte Breite des Kanals größer ist, vorzugsweise um mindestens 25%, als die Breite der Spannfläche, die auf dem federnden Wandabschnitt ausgebildet ist, jeweils in Richtung der Längsachse L des Werkzeughalters gesehen. Dies erlaubt eine besonders gute Ausnutzung der Wirkung des federnden Wandabschnitts.

Vorzugsweise ist die in radialer Richtung gemessene Tiefe des jeweiligen Kanals sogar so gering, dass für sie gilt < 0,075 mm.

Bevorzugt ist die in Richtung der Rotationsachse L gemessene Breite des jeweiligen Kanals um mindestens den Faktor 10 und idealerweise sogar um den Faktor 20 größer als die in radialer Richtung gemessene Tiefe des Kanals. Eine solche Ausgestaltung fördert den bereits angesprochenen Effekt, dass der federnde Wandabschnitt in der besagten Weise "auf Block" gehen kann, ohne dass örtlich Belastungen im Bereich des federnden Wandabschnitts auftreten, die schädlich sind.

Im Rahmen einer bevorzugten Ausführungsform ist vorgesehen, dass die Hülsenpartie des Werkzeughalters zweiteilig ausgeführt ist und aus einem Hülsenabschnitt besteht, der in der Regel integraler Bestandteil des Werkzeughalters ist, und einer in dem Hülsenabschnitt festgesetzten Buchse, in deren äußere Umfangsfläche eine oder mehrere Nuten eingearbeitet sind, die maßgeblich den oder die besagten Kanäle bilden. Mit Hilfe einer solchen Zweiteiligkeit lassen sich die erfindungsgemäßen Kanäle besonders rationell herstellen, obgleich auch eine anderweitige Herstellung denkbar ist, z.B. durch pulvermetallurgische Verfahren, die es gestatten, in einer einteiligen Hülsenpartie integral entsprechende Kanäle herzustellen. Jedenfalls hat eine solche Zweiteiligkeit den Vorteil, dass sich sehr einfach unterschiedliche Varianten bzw. Baureihen herstellen lassen, indem immer gleich geartete oder nur wenige unterschiedliche Rohlinge des Werkzeughalters mit unterschiedlichen Buchsen bestückt werden, die jeweils die gewünschte Dämpfungscharakteristik bewirken.

Bei einer bevorzugten Ausführungsform ist vorgesehen, dass die bevorzugt in die äußere Umfangsfläche der Buchse eingearbeiteten Kanäle bzw. kanalbildenden Nuten vorzugsweise vollständig mit einer Flüssigkeit, vorzugsweise Öl, ausgefüllt sind.

Die Charakteristik der kanalbildenden Nuten lässt sich in einer nicht erfindungsgemäßen Ausführungsform sehr feinstufig dadurch einstellen, dass die Nuten beispielsweise mit Hilfe galvanischer Abscheidung ganz oder teilweise mit einem Nichteisenmetall aufgefüllt werden, woraufhin der gesamte (durch die Abscheidung zumeist durchgehend beschichtete) Außenumfang der Buchse auf ein vorgegebenes Passmaß geschliffen wird, meist so, dass am Ende nur noch in den Nuten das abgeschiedene Material zu finden ist. Dann wird die Buchse in die Hülsenpartie eingebaut und vorzugsweise endgültig dort festgesetzt.

Ansonsten besteht in einer weiteren nicht erfindungsgemäßen Ausführungsform auch die Möglichkeit, die Buchsen in geeignete Spritzgussformen einzulegen und die kanalbildenden Nuten mit einer Kunststoffmasse oder einem Elastomer bzw. einem Gummielastomer auszuspritzen. Sodann wird der Außenumfang der Buchse (wie oben beschrieben) überschliffen und so auf sein Passmaß gebracht. Bei der bevorzugten Verwendung entsprechend präziser Spritzgussformen wird tatsächlich nur die jeweils hierzu bestimmte Nut mit Kunststoff etc. ausgespritzt, die Buchse behält aber ihren präzise gefertigten Durchmesser.

Ansonsten besteht auch die Möglichkeit, die Buchse bei in ein Ölbad eingetauchtem Werkzeughalter dort einzubauen. Auf diese Art und Weise wird eine dauerhafte Befüllung der Kanäle mit dämpfend wirkendem Öl erreicht.

Ganz ideal ist es, die Buchse aus einer besonders stark schwingungsdämpfenden Metalllegierung herzustellen ("hochdämpfendes Metall"), wie sie zurzeit beispielsweise die Firma Les Bronzes d'Industrie, 26 rue de la Republique, 57360 Amneville, Frankreich, unter der Markenbezeichnung EXIUM® AM anbietet. Allgemeiner gesagt ist unter einem hochdämpfenden Metall ein Metall oder eine Metalllegierung zu verstehen, das bzw. die in radialer Richtung der Buchse eine um mindestens 15% und idealerweise um mindestens 25% bessere Dämpfungseigenschaft als herkömmlicher Werkzeugstahl zeigt.

Vorzugsweise ist die Buchse auf ihrer dem freien Ende des Werkzeughalters zugewandten Stirnseite mit dem Werkzeughalter verschweißt. Dies vereinfacht die Handhabung des Werkzeughalters, da sichergestellt ist, dass die Buchse beim Ein- und Ausbau des jeweiligen Werkzeugs nicht ungewollt aus dem Werkzeughalter herausgezogen wird.

Es hat sich überraschenderweise als besonders günstig erwiesen, die Buchse insgesamt besonders dünnwandig auszuführen und ihr vorzugsweise eine Wandstärke < 2,5 mm und idealerweise < 1,5 mm zu verleihen. Eine derart dünnwandige Buchse ist insgesamt so elastisch, dass gerade sie die Wirkung der in Umfangsrichtung verlaufenden Kanäle optimal zur Geltung bringt und zugleich auch die gegenüber dem Werkzeugschaft aufzubringenden Einspannkräfte nicht nennenswert schmälert.

Ein besonders großer Rationalisierungseffekt lässt sich verwirklichen, wenn man die Erfindung nicht nur zum Bau einzelner Werkzeughalter verwendet, sondern zu einem System zur Herstellung der beschriebenen Werkzeughalter zum reibschlüssigen Einspannen eines Werkzeugschafts mit unterschiedlichen Einspanncharakteristiken ausbaut. Ein solches System besteht zweckmäßigerweise aus einer Mehrzahl von identisch ausgestalteten Werkzeughaltergrundkörpern und unterschiedlichen, mit den Werkzeughaltergrundkörpern zu verwendenden Buchsen. Letztere unterscheiden sich in Bezug auf die in ihre äußere Umfangsfläche eingearbeiteten kanalbildenden Strukturen und/oder die Gestaltung der Spannfläche an ihrer inneren Umfangsfläche. Auf diese Art und Weise kann ein und derselbe Werkzeughaltergrundkörper sehr einfach an die unterschiedlichsten Bedürfnisse angepasst werden.

Diese Anpassung kann man sich auf der Stufe der Werkzeughalter-Fertigung zu Nutze machen, indem mit geringem Aufwand aus einem immer gleichen oder wenigen unterschiedlichen Werkzeughaltergrundkörpern nur durch den Einbau unterschiedlich gestalteter und damit unterschiedlich nachgiebiger Buchsen eine oder mehrere Baureihen von Werkzeughaltern hergestellt werden, die eine schrittweise abgestufte Einspanncharakteristik besitzen.

Noch effizienter lässt sich der Systemgedanke nutzen, wenn die Buchsen jeweils nicht endgültig in dem Werkzeughaltergrundkörper festgesetzt werden, sondern so in dem Werkzeughaltergrundkörper festgesetzt sind, dass sie der Endnutzer des Werkzeughalters austauschen kann. Dies ermöglicht es dem Endnutzer immer dann, wenn er feststellt, dass die von ihm gewählte Kombination aus Werkzeughalter und Werkzeug auf der damit bestückten Werkzeugmaschine nicht optimal läuft, sondern zu störenden Schwingungen neigt, kurzerhand den Werkzeughalter bei ansonsten vorzugsweise gleichbleibenden Verhältnissen mit einer Buchse zu bestücken, die ihm eine signifikant andere Einspanncharakteristik verleiht und daher das Gesamtsystem aus dem kritischen Schwingungsbereich herausführt.

Der Systemgedanke lässt sich auch verfahrensmäßig ausdrücken: Es wird das Verfahren beschrieben, Werkzeughalter mit unterschiedlichen Einspanncharakteristiken dadurch herzustellen, dass man immer gleiche oder wenige unterschiedliche Werkzeughaltergrundkörper mit unterschiedlichen Buchsen der genannten Art bestückt.

Nachdem es möglicherweise bereits an anderer Stelle in Umfangsrichtung genutete Buchsen gegeben hat, die zu ganz anderen Zwecken in Werkzeughalter eingebaut wurden, wird im Rahmen der Erfindung auch Schutz für die Verwendung des Werkzeughalters gemäß einem der Ansprüche 1 bis 9 beansprucht. Es werden unterschiedliche Buchsen verwendet, die an ihrem Außenumfang jeweils mehrere in Umfangsrichtung umlaufende, in sich geschlossene erste Nuten oder mindestens eine entlang einer Schraubenlinie in mehreren Windungen um den Außenumfang herum umlaufende erste Nut besitzen und mit deren Hilfe die Einspanncharakteristik eines Werkzeugschafts beeinflusst wird. Die so gestaltete Buchse wird zum Einschieben und vorzugsweise dauerhaften Festsetzen in einen Werkzeughalter verwendet, der später das Werkzeug aufnimmt, oder zum Aufschieben und vorzugsweise dauerhaften Festsetzen auf einen Werkzeugschaft.

Solche Buchsen besitzen an ihrem Innenumfang mehrere in Umfangsrichtung umlaufende, in sich geschlossene zweite Nuten oder mindestens eine entlang einer Schraubenlinie in mehreren Windungen um den Außenumfang herum umlaufende zweite Nut, wobei die zweiten Nuten jeweils im Bereich der Zwischenräume zwischen zwei ersten Nuten angeordnet sind oder die mindestens eine zweite Nut im Bereich des Zwischenraums zwischen zwei Windungen der mindestens einen ersten Nut angeordnet ist.

Idealerweise ist die Tiefe der ersten Nut oder Nuten so gewählt, dass der die Nut überspannende Wandabschnitt gegen den Innenumfang des Hülsenabschnitts zur Anlage kommt, wenn die Betriebskräfte eine bestimmte Größe überschreiten.

Bei einer solchen Buchse ist die in radialer Richtung gemessene Tiefe einer ersten Nut oder Nuten < 0,1 mm und besser noch < 0,075 mm.

Es hat sich als besonders günstig erwiesen, wenn die in radialer Richtung gemessene Tiefe der zweiten Nut oder Nuten < 1 mm, besser < 0,5 mm und im Idealfall < 0,1 mm ist.

Als besonders günstig hat sich die Fertigung der Buchse aus einem Material, idealerweise einem metallischen Material, erwiesen, welches eine höhere Dämpfung besitzt als herkömmlicher Werkzeugstahl. Besonders geeignet ist die unter der Markenbezeichnung "Star Silent" von der Firma Daido Steel, 2-30, Daido cho, Minami-ku, Nagoya, 457-8545 Japan vertriebene Metalllegierung.

Es ist nicht zwingend erforderlich, die Buchse in speziellen Werkzeughaltern zu verwenden, die so dimensioniert sind, dass sie die Buchse zusätzlich aufnehmen können. Stattdessen kann die Erfindung speziell zum Zwecke der Nachrüstung auch so zum Einsatz kommen, dass der jeweilige Schaft des Zerspanwerkzeugs mit der Buchse versehen wird - so, wie das von den entsprechenden Ansprüchen beschrieben wird.

Die erfindungsgemäß ausgestalteten Werkzeughalter sind dazu prädestiniert, um mit der sogenannten "Safelock-Technologie" der Anmelderin kombiniert zu werden, die beispielsweise in dem erteilten europäischen Patent EP 2 004 351 B1 näher beschrieben ist, dessen gesamter Inhalt durch Verweis zum Gegenstand dieser Anmeldung gemacht wird. Die Safelock-Technologie zeichnet sich kurz gesagt dadurch aus, dass der kraftschlüssig eingespannte Werkzeugschaft zusätzlich durch Formschlusselemente festgehalten wird, die in eine oder mehrere schraubenförmige Nuten im Werkzeugschaft eingreifen. Die Safelock-Technologie verhindert ein unbeabsichtigtes Ausziehen des Werkzeugs, insbesondere durch die bei der Hochleistungszerspanung (HPC) auftretenden Mikrokriechbewegungen. Derartiges zu verhindern, kann gerade auch dort von erhöhter praktischer Bedeutung sein, wo die Werkzeugschäfte nicht unmittelbar von der Oberfläche einer fest mit dem restlichen Werkzeughalter verbundenen Hülsenpartie im Presssitz gehalten werden, sondern unter Zwischenlage der genannten Buchse.

Da die Erfindung nicht zuletzt für die Hochleistungszerspanung von Bedeutung ist, kommt sie vorzugsweise zusammen mit einem Werkzeugkühlsystem zum Einsatz, wie es von der Patentanmeldung WO 2010/022875 beschrieben wird.

Weitere Vorteile, Ausgestaltungsmöglichkeiten und Wirkungsweisen ergeben sich anhand der nachfolgend unter Bezugnahme auf die mittels den Figuren beschriebenen Ausführungsbeispiele.

Die Figur 1 zeigt eine Gesamtansicht des ersten Ausführungsbeispiels.

Die Figur 2 zeigt einen Schnitt durch die Hülsenpartie des ersten Ausführungsbeispiels.

Die Figur 3 zeigt einen Ausschnitt aus der Fig. 2.

Die Figur 4 zeigt eine Gesamtansicht des zweiten Ausführungsbeispiels.

Die Figur 5 zeigt einen Schnitt durch die Hülsenpartie des zweiten Ausführungsbeispiels.

Die Figur 6 zeigt einen Ausschnitt aus der Figur 5.

Die Figur 7 zeigt einen Schnitt entlang der Rotationsachse durch eine Spannzange, die ein drittes Ausführungsbeispiel des Werkzeughalters gemäß der Erfindung darstellt und die sich durch die integral in sie eingearbeiteten Kanäle auszeichnet.

Die Figur 8 zeigt eine Ansicht der Spannzange gemäß Figur 7 von vorne gesehen.

Die Figur 9 zeigt eine Frontansicht einer Spannzange, die ein viertes Ausführungsbeispiel des Werkzeughalters gemäß der Erfindung darstellt, wobei es sich um eine Spannzange mit einer eingeschobenen Buchse handelt.

Die Figur 10 zeigt einen vertikal verlaufenden Schnitt durch die Spannzange gemäß Figur 9.

Die Figur 11 zeigt die Spannzange gemäß Figur 9 in einer anderen Position.

Die Figur 12 zeigt einen vertikal verlaufenden Schnitt durch die Spannzange gemäß Figur 11.

Die Figur 13 zeigt einen vergrößerten Ausschnitt der in den Figuren 10 und 12 zu sehenden Hülsenpartie.

Die Figur 14 zeigt eine Frontansicht einer Spannzange, die ein fünftes Ausführungsbeispiel des Werkzeughalters gemäß der Erfindung darstellt, wobei es sich um eine Spannzange mit einer eingeschobenen, andersartig gestalteten Buchse handelt.

Die Figur 15 zeigt einen vertikal verlaufenden Schnitt durch die Spannzange gemäß Figur 14.

Die Figur 16 zeigt die Spannzange gemäß Figur 14 in einer anderen Position.

Die Figur 17 zeigt einen vertikal verlaufenden Schnitt durch die Spannzange gemäß Figur 16.

Die Figur 18 zeigt einen vergrößerten Ausschnitt der in den Figuren 14 und 16 zu sehenden Hülsenpartie.

Die Figur 19 zeigt einen sehr stark vergrößerten Ausschnitt der erfindungsgemäßen Buchse, wobei dieser Ausschnitt vorzugsweise für alle in den Ausführungsbeispielen beschriebenen Buchsen repräsentativ ist, einschließlich jener Buchsen, die von den Figuren 20 und 21 gezeigt werden.

Die Figur 20 zeigt den Achsschnitt durch einen Fräser, der mit der erfindungsgemäßen Buchse ausgerüstet ist.

Die Figur 21 zeigt eine Seitenansicht des Fräsers gemäß Figur 20.

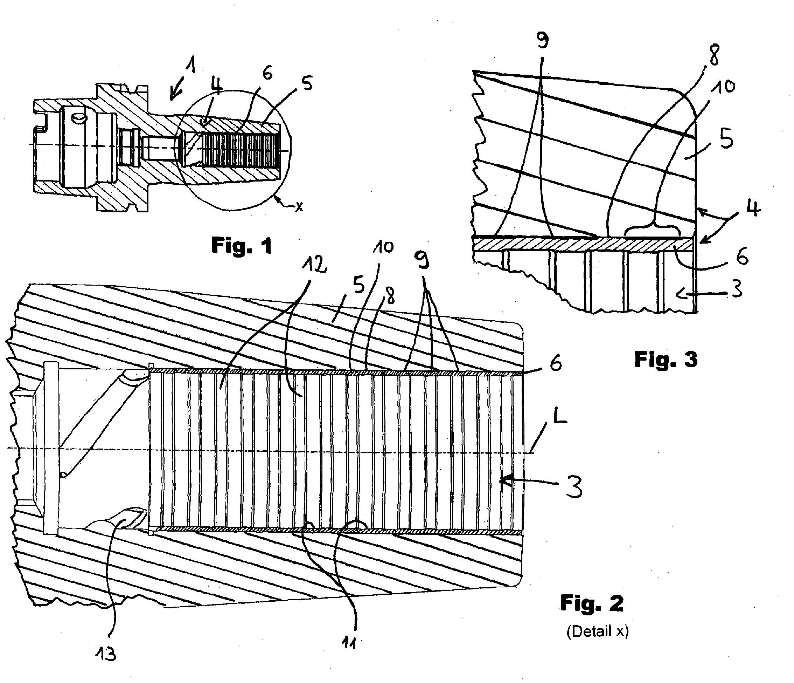

Die Figur 1 zeigt einen Werkzeughalter 1 in Gestalt eines Schrumpffutters. Das Bezugszeichen L bezeichnet die Rotationsachse des Werkzeughalters, um die sich dieser bei bestimmungsgemäßem Einsatz dreht.

Schrumpffutter vermögen die Schäfte von Werkzeugen bauartbedingt besonders hart einzuspannen. Das ist in vielen Fällen von Vorteil, lässt aber die Schrumpffutter in all jenen Fällen, in denen eine weichere Einspannung opportun ist, besonders prädestiniert für die Anwendung der Erfindung sein.

Wie man am besten anhand der Figuren 2 und 3 sieht, besitzt dieser Werkzeughalter 1 im Inneren seiner Hülsenpartie 4 eine Werkzeugaufnahme 3.

Die Hülsenpartie 4 ist bei diesem Ausführungsbeispiel nicht einstückig ausgeführt, sondern besteht stattdessen aus dem zumeist als integraler Bestandteil des Werkzeughalters 1 ausgeführten Hülsenabschnitt 5 und der in diesem Hülsenabschnitt 5 gehaltenen Buchse 6.

Im Regelfall ist diese Buchse 6 unlösbar mit dem Hülsenabschnitt 5 verbunden, etwa durch eine in den Figuren nicht gezeigte Schweißnaht, die die freie Stirnseite der Buchse 6 mit der Stirnseite des Hülsenabschnitts 5 verbindet.

Die Buchse 6 ist an ihrem Außenumfang mit mehreren, vorzugsweise in Umfangsrichtung durchgehenden ersten Ringnuten 7 versehen, die voneinander jeweils durch einen Ringsteg 8 getrennt sind. Die Ringnuten sind in sich geschlossen. Sobald die Buchse 6 bestimmungsgemäß in dem Hülsenabschnitt 5 montiert ist, bilden die Buchse 6 und der Hülsenabschnitt 5 gemeinsam eine Hülsenpartie 4, die eine Materialaussparung in Gestalt mehrerer entsprechender ringförmiger Kanäle 9 aufweist. Es wird insbesondere auf die Figur 3 verwiesen. Sie zeigt, dass die hier maßgeblich durch die ersten Ringnuten 7 gebildeten ringförmigen Kanäle 9 von der eigentlichen Werkzeugaufnahme jeweils durch einen in radialer Richtung federnd nachgiebigen Wandabschnitt 10 getrennt sind. Dieser verschließt die ringförmigen Kanäle 9 gegenüber der Werkzeugaufnahme, so dass keine unmittelbare Verbindung zwischen den ringförmigen Kanälen 9 und der Umfangsfläche des einzuspannenden Werkzeugschafts besteht, sondern eine Trennung durch den besagten Wandabschnitt 10.

Dadurch, dass die Wandabschnitte 10 in radialer Richtung nachgiebig sind, wird der Werkzeugschaft weicher eingespannt. Anders als etwa im Wesentlichen in Richtung parallel zu der Rotationsachse L in der Hülsenpartie verlaufende Kanäle bzw. Bohrungen, sorgen die ununterbrochen, in Umfangsrichtung verlaufenden ringförmigen Kanäle 9 dafür, dass die Steifigkeit, mit der der Werkzeugschaft gegenüber den ihn im Betrieb beanspruchenden Kräften eingespannt ist, in allen Richtungen identisch und daher nicht von der aktuellen Drehposition des Werkzeughalters abhängig ist. Dies sorgt erfindungsgemäß für einen besonders ruhigen Lauf.

Besonders günstig wirkt sich bei diesem Ausführungsbeispiel aus, dass die Innenumfangsfläche der Buchse 6 keine durchgehend einheitliche Zylindermantelfläche ist. Vielmehr trägt die Buchse 6 auch auf ihrer inneren Umfangsfläche Ringnuten in Gestalt der zweiten Ringnuten 11. Diese bilden zwischen sich ringförmige Spannflächen 12 aus, die bestimmungsgemäß gegen den Umfang des Werkzeugschafts anliegen. Sie halten den Werkzeugschaft kraftschlüssig fest und übertragen so zumindest den überwiegenden Teil des im Betrieb aufzubringenden Drehmoments auf den Werkzeugschaft.

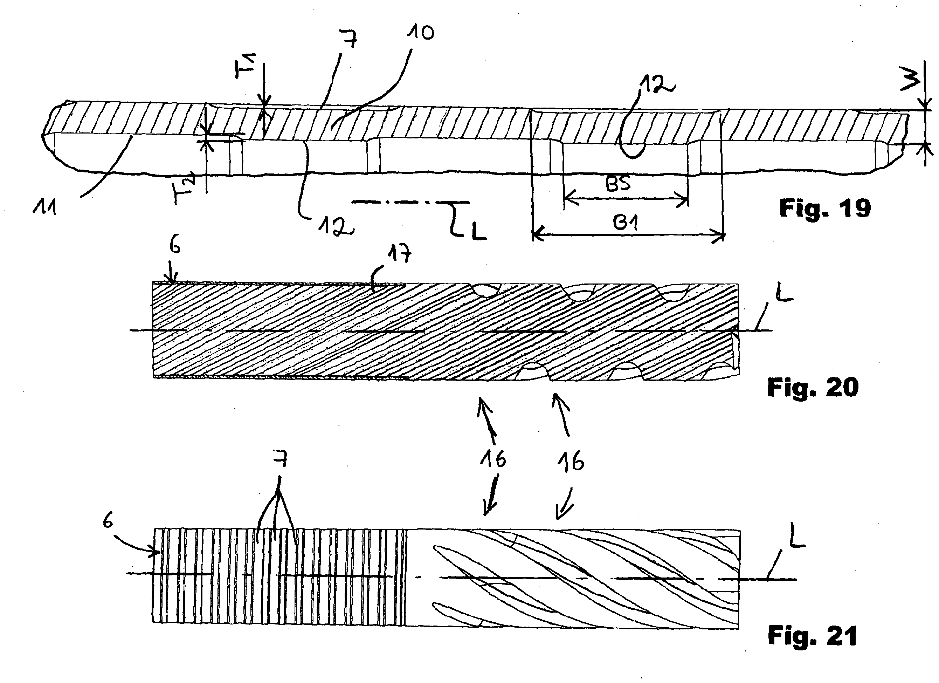

Vorzugsweise sind die Spannflächen 12 in einer bestimmten Art und Weise positioniert und ausgestaltet, nämlich so, wie das ebenfalls die Figur 3 zeigt, vgl. aber auch Figur 19.

Die Spannflächen 12 sind jeweils am Innenumfang eines federnd nachgiebigen Wandabschnitts 10 ausgebildet. Die betreffende Spannfläche 12 ist also in Umfangsrichtung vollständig von einer Kavität in Gestalt des Kanals 9 umgeben, liegt also "hohl", und ist daher dazu in der Lage, elastisch federnd in radialer Richtung auszuweichen bzw. sich zu bewegen.

Die verschiedenen Maße, die für die Kanäle bzw. die erfindungsgemäße Buchse relevant sind, lassen sich am besten anhand der Figur 19 erläutern:
Vorzugsweise ist die parallel zur Rotationsachse L gemessene Breite BS jeder der Spannflächen 12 kleiner als die in gleicher Richtung gemessene Breite B1 des jeweils durch eine erste Nut 7 gebildeten Kanals 9, den der elastische Wandabschnitt 10 überspannt.

Wie man sieht, ist die Buchse dünnwandig ausgeführt, ihre Wandstärke W beträgt vorzugsweise weniger als 2,5 mm und besser weniger als 1 mm.

Es ist besonders günstig, jeden oder zumindest die überwiegende Anzahl der Kanäle 9 jeweils so auszuführen, dass die Breite B1 des betreffenden Kanals 9 wesentlich größer ist als die in radialer Richtung gemessene Tiefe T1. Bei einer solchen Ausgestaltung kann der federnd nachgiebige Wandabschnitt 10 bei Bedarf "auf Block" gehen, d.h. immer dann, wenn im Betrieb aus irgendeinem Grund schlagartig sehr große Kräfte aufgebracht werden müssen, kann sich der federnd nachgiebige Wandabschnitt 10 in radial auswärtiger Richtung abstützen. Dies verhindert, dass die Einspannung des Werkzeugschafts zu weich wird, um allen im Betrieb auftretenden Belastungen gewachsen zu sein.

Wie man am besten anhand der Figur 2 sieht, ist der Werkzeughalter im Anschluss an die Buchse 6 vorzugsweise mit der bereits oben angesprochenen Safelock-Gewindestruktur 13 versehen.

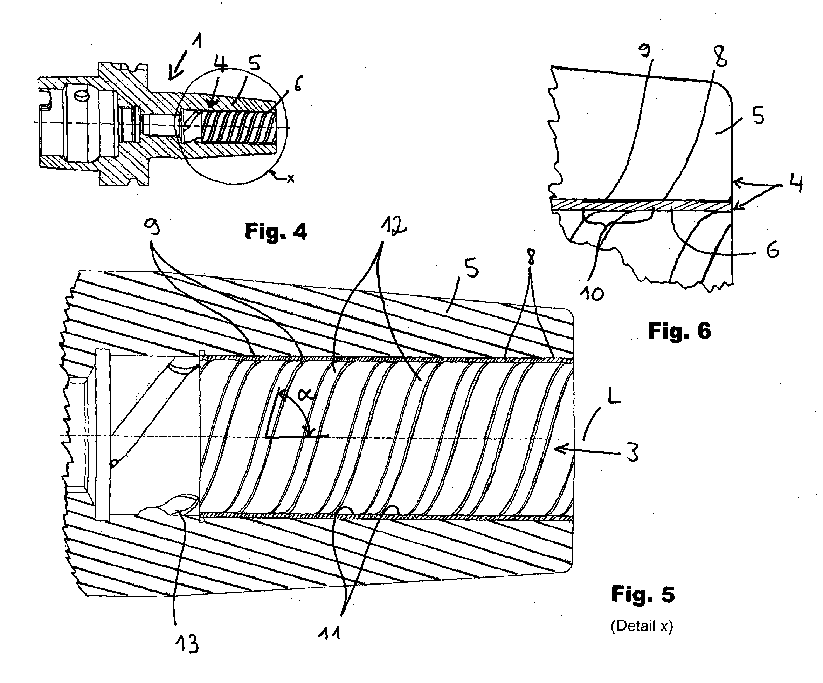

Die Figur 4 zeigt einen weiteren Werkzeughalter 1 in Gestalt eines Schrumpffutters. Der Grundkörper dieses Werkzeughalters entspricht dem des von Figur 1 gezeigten Werkzeughalters. Auch bei diesem Ausführungsbeispiel ist die Hülsenpartie 4 nicht einstückig ausgeführt.

Im Unterschied zu dem soeben beschriebenen ersten Ausführungsbeispiel ist der Werkzeughalter hier mit einer Buchse ausgerüstet, die mit den an ihrem Außenumfang angebrachten ersten Nuten nicht mehrere jeweils in Umfangsrichtung in sich geschlossene Kanäle bildet, sondern zwei vorzugsweise ununterbrochen fortlaufende Kanäle 9, die sich jeweils entlang einer eigenen Schraubenlinie mehr als 3 Mal um die Werkzeugaufnahmeöffnung herumwinden. Die Kanäle 9 bilden hier somit eine Anordnung, die man als zweigängiges Gewinde bezeichnen kann.

Auch bei dieser Ausführungsform sind die ringförmigen Kanäle 9 von der eigentlichen Werkzeugaufnahme jeweils durch einen in radialer Richtung federnd nachgiebigen Wandabschnitt 10 getrennt, der die ringförmigen Kanäle 9 gegenüber der Werkzeugaufnahme verschließt.

Auch hier trägt jeweils der federnd nachgiebige Wandabschnitt die eigentliche Spannfläche 12, so dass auch hier die Spannfläche "hohl" liegt. Damit sind bei diesem Ausführungsbeispiel zwei Spannflächen vorhanden, die hier im Gegensatz zum ersten Ausführungsbeispiel aber nicht in Gestalt mehrerer Kreisringe ausgebildet sind, sondern in Gestalt zweier Schraubenlinien, die nach Art eines zweigängigen Gewindes angeordnet sind und sich ebenfalls mehrfach um die Rotationsachse L des Werkzeughalters herumwinden.

Vorzugsweise ist auch bei diesem Ausführungsbeispiel die parallel zur Rotationsachse L gemessene Breite BS jeder der Spannflächen 12 kleiner als die in gleicher Richtung gemessene Breite B1 des Kanals 9, den der Wandabschnitt 10 überspannt, vgl. nochmals die auch für dieses Ausführungsbeispiel repräsentative Figur 19.

Aufgrund der soeben beschriebenen Maßnahmen wird die Einspannung des Werkzeugschafts auch bei diesem Ausführungsbeispiel weicher.

In Bezug auf die Dimensionierung der Kanäle 9 bzw. (bei Verwendung einer Buchse) der ersten und zweiten Nuten 7, 11 und der Spannflächen 12 sowie der Wandstärke W der Buchse 6 gilt das oben für das erste Ausführungsbeispiel Gesagte für das zweite Ausführungsbeispiel sinngemäß.

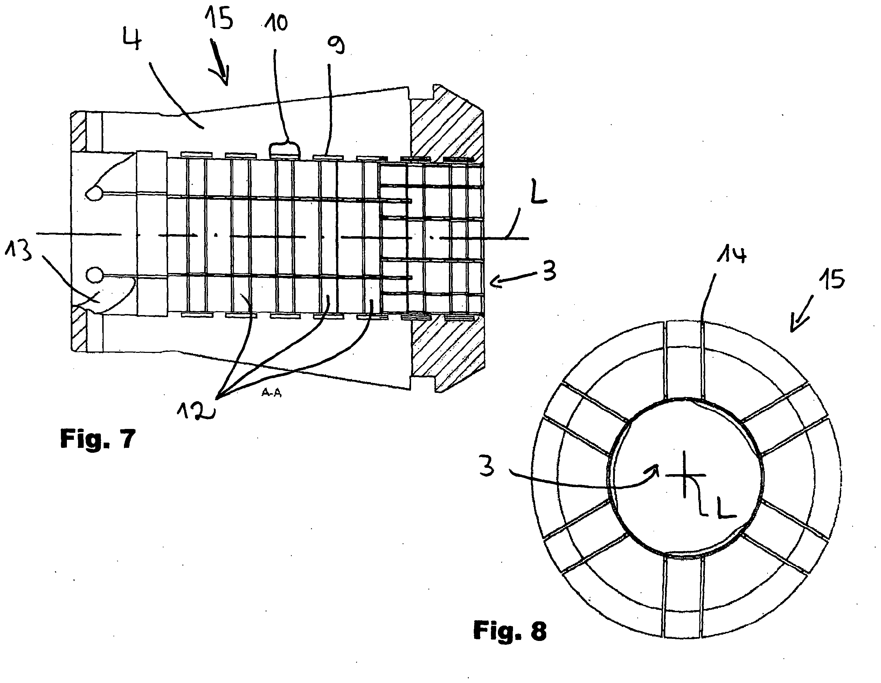

Die Figuren 7 und 8 zeigen ein drittes Ausführungsbeispiel der Erfindung, die hier allerdings nicht zur Beeinflussung der Einspanncharakteristik eines Schrumpffutters eingesetzt wird, sondern zur Beeinflussung der Einspanncharakteristik einer Spannzange 15. Diese Spannzange 15 wird durch eine hier nicht gezeigte Überwurfmutter in Richtung der Rotationsachse L in einen an ihrem Außenumfang angreifenden Kegelsitz hineingepresst und hält so den Werkzeugschaft im Klemmsitz.

Vorteilhafterweise ist die Spannzange auch hier mit der bereits oben angesprochenen Safelock-Gewindestruktur 13 versehen.

Die Kanäle 9 sind bei diesem Ausführungsbeispiel in Gestalt mehrerer in Umfangsrichtung verlaufender, kreisringförmiger Kanäle ausgebildet, die - wie im ersten Ausführungsbeispiel - zur Seite der Werkzeugaufnahme hin durch federnd nachgiebige Wandabschnitte 10 abgeschlossen sind. Die Kanäle werden durch die sich durch die Wand der Spannzange 15 hindurch erstreckenden und ihr die erforderliche Kompressibilität verleihenden Schlitze 14 angeschnitten, sind aber ansonsten in sich geschlossen. Soweit sich aus der anschließenden Erläuterung der Besonderheiten dieses Ausführungsbeispiels nichts anderes ergibt, sind die Kanäle 9, die federnd nachgiebigen Wandabschnitte 10 und die Spannflächen 12 vorzugsweise so ausgebildet, angeordnet und dimensioniert, wie oben für das erste Ausführungsbeispiel beschrieben, vgl. auch Figur 19, deren Darstellung hier sinngemäß gilt.

Die Besonderheit dieses Ausführungsbeispiels liegt darin, dass die Känale hier nicht mit Hilfe einer Buchse hergestellt werden, die in die Spannzange eingeschoben und dort festgesetzt wird, sondern dass die Kanäle integral in der einstückigen Spannzange ausgebildet sind.

Eine solche Ausbildung der Kanäle lässt sich am einfachsten dadurch bewerkstelligen, dass die Spannzange durch ein pulvermetallurgisches Verfahren hergestellt wird.

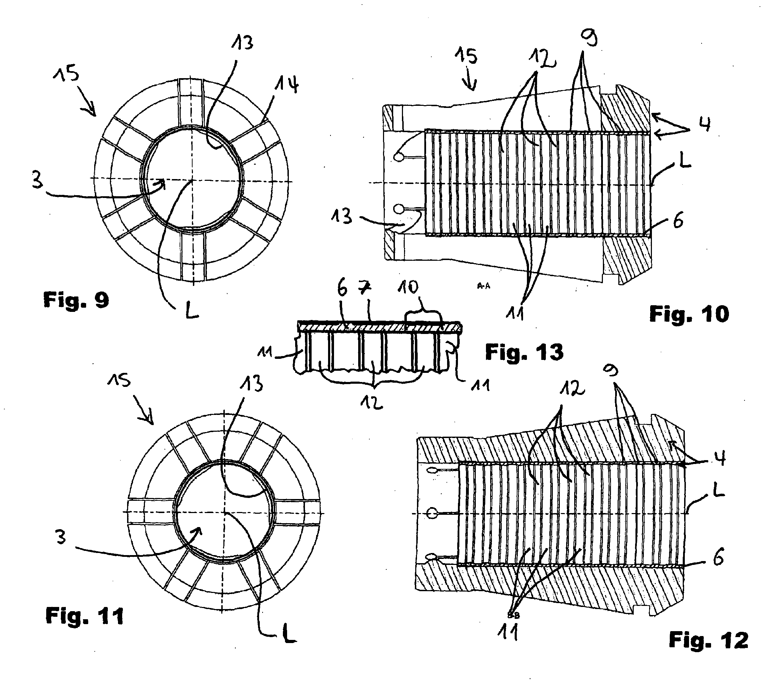

Die Figuren 9 bis 13 zeigen ein viertes Ausführungsbeispiel der Erfindung. Auch bei diesem Ausführungsbeispiel wird die Erfindung zur Beeinflussung der Einspanncharakteristik einer Spannzange 15 eingesetzt.

Allerdings ist dieses Ausführungsbeispiel eng mit dem ersten Ausführungsbeispiel verwandt, denn die Kanäle 9 werden hier dadurch hergestellt, dass die bereits im Zusammenhang mit dem ersten Ausführungsbeispiel eingehend beschriebene Buchse 6, die am Außenumfang erste Nuten 7 trägt, in eine Spannzange 15 anstatt in ein Schrumpffutter eingesetzt wird. Wie bei dem ersten Ausführungsbeispiel ist die Buchse dabei in Umfangsrichtung in sich geschlossen, weist also keinen Längsschlitz auf.

Für die Anordnung, Ausgestaltung und Dimensionierung der Kanäle, der federnden Wandabschnitte und der Spannflächen gilt daher das für das erste Ausführungsbeispiel Gesagte.

Besonders positiv wirkt sich hier die bereits oben beschriebene Dünnwandigkeit der Buchse 6 aus, durch die sichergestellt wird, dass die Haltekraft der Spannzange nicht wesentlich verringert wird, obwohl die Buchse 6 keinen Längsschlitz aufweist.

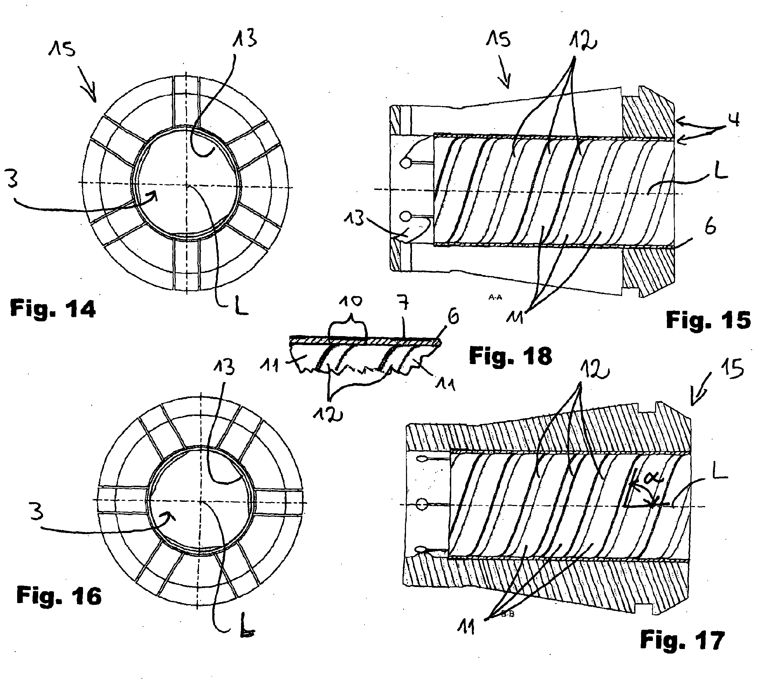

Die Figuren 14 bis 18 zeigen ein fünftes Ausführungsbeispiel der Erfindung.

Dieses Ausführungsbeispiel ist eng mit dem zweiten Ausführungsbeispiel verwandt, denn die Kanäle 9 werden hier dadurch hergestellt, dass die bereits im Zusammenhang mit dem zweiten Ausführungsbeispiel eingehend beschriebene Buchse 6 in eine Spannzange 15 anstatt in ein Schrumpffutter eingesetzt wird. Für die Anordnung, Ausgestaltung und Dimensionierung der Kanäle, der federnden Wandabschnitte und der Spannflächen gilt daher das für das zweite Ausführungsbeispiel Gesagte.

Auch hier wirkt sich die Dünnwandigkeit der Buchse 6 positiv aus.

Die Figuren 20 und 21 zeigen, dass die Erfindung ohne weiteres auch nachträglich zum Einsatz gebracht werden kann, ohne Änderungen an den Werkzeughaltern vornehmen zu müssen.

Zu diesem Zweck kommen die bereits im Rahmen der zuvor beschriebenen Ausführungsbeispiele verwendeten Buchsen 6 zum Einsatz, die vorzugsweise auch so gestaltet sind, wie das bereits oben beschrieben wurde, insbesondere auch, was die Auslegung der Nuten 7 bzw. 11, der federnden Wandabschnitte 10 und der Spannflächen 12 angeht. Die Buchsen 6 können außen und ggf. auch innen mehrere in Umfangsrichtung verlaufende Nuten 7 bzw. 11 aufweisen, oder stattdessen die ebenfalls bereits oben beschriebene(n) spiralförmige(n) Nut(en).

Zweckmäßigerweise wird eine solche Buchse 6 durch Aufschrumpfen und/oder örtliche Verschweißung dauerhaft auf dem Werkzeugschaft 17 festgesetzt.

Dabei ist die Buchse 6 so dimensioniert, dass sie nach dem Festsetzen einen maximalen Außendurchmesser aufweist, der zumindest im Wesentlichen oder vorzugsweise vollständig einem der gängigen Nenndurchmesser für in Werkzeughalter einzuspannende Werkzeugschäfte entspricht, so dass das mit der Buchse versehene Werkzeug routinemäßig in einen der StandardWerkzeughalter eingespannt werden kann.

Um dies zu erreichen, kann der Werkzeugschaft an seinem den Werkzeugschneiden abgewandten Ende einen Abschnitt mit einem verringerten Durchmesser besitzen, so dass eine Buchse auf den Werkzeugschaft aufgeschoben werden kann, deren maximaler Außendurchmesser dem eigentlichen Schaftdurchmesser dieses Werkzeugs entspricht.

Alternativ kann die Buchse auf den nicht in seinem Durchmesser verringerten Werkzeugschaft aufgeschoben werden und ist dann so dimensioniert, dass ihr maximaler Außendurchmesser nach dem Festsetzen dem Schaftnenndurchmesser eines größeren Werkzeugs entspricht, so dass das Werkzeug mitsamt der Buchse in den eigentlich für dieses größere Werkzeug bestimmten Standardwerkzeughalter eingeschoben werden kann, ohne dass Veränderungen an dem Werkzeughalter vorzunehmen sind.

Generell ist exemplarisch anhand der von Figur 19 gezeigten Buchse, aber mit Wirkung für alle Ausführungsbeispiele, noch zu sagen, dass durch geeignete Gestaltung der Buchse das Schwingungs- und Dämpfungsverhalten verändert und angepasst werden kann. Das kann vor allem durch die Positionierung und Dimensionierung der Ringnuten 7 und 11 geschehen.

In Figur 19 sind die Nuten so angebracht, dass eine Spannfläche 12 entsteht, die komplett über der Nut 7 liegt. Durch die Änderung der Breite und Tiefe der Nuten 7 und 11 kann die Steifigkeit der Buchse beeinflusst werden. Je schmaler die Spannfläche 12 wird und je weiter die Spannfläche 12 ausschließlich im Bereich der Mitte eine Nut 7 angeordnet ist, desto weicher wird die Spannung. Umgekehrt kann die Spannung härter werden, wenn die Spannfläche 12 so breit ist, dass sie die Nut 7 vollständig übergreift und an den Rändern der Nut über diese hinaus geht und dort nicht hohl liegt.

Die Nuten 7 und 11 können sich im Übrigen auch derart überlappen, dass sich die Spannfläche 12 auf zwei benachbarten Nuten 7 abstützt. Dadurch ließe sich eine relativ weiche und nachgiebige Spannung realisieren, jedenfalls dann, wenn die beiden benachbarten Nuten sehr eng nebeneinanderliegen.

### Bezugszeichenliste

- 1: Werkzeughalter
- 2: nicht vergeben
- 3: Werkzeugaufnahme
- 4: Hülsenpartie
- 5: Hülsenabschnitt
- 6: Buchse
- 7: Ringnut
- 8: Ringsteg
- 9: Kanal
- 10: federnd nachgiebiger Wandabschnitt
- 11: zweite Ringnuten
- 12: ringförmige Spannfläche
- 13: Safelock-Gewindestruktur
- 14: Schlitz
- 15: Spannzange
- 16: Fräser
- 17: Werkzeugschaft
- L: Rotationsachse Werkzeughalter
- BS: Breite Spannfläche
- B1: Breite Kanal bzw. erster Nut
- W: Wandstärke Buchse
- T1: Tiefe Kanal bzw. erster Nut
- α: Winkel zwischen Mittellinientangente des Kanals

## Patentansprüche

1. Werkzeughalter (1) mit einer Werkzeugaufnahme (3) zum reibschlüssigen Einspannen eines Werkzeugschafts, wobei die Werkzeugaufnahme (3) aus mehreren voneinander beabstandeten, ringförmigen Spannflächen (12) besteht, die dazu bestimmt sind, den Werkzeugschaft kraftschlüssig zu halten und die am Innenumfang einer Hülsenpartie (4) ausgebildet sind, wobei die Hülsenpartie (4) eine Materialaussparung zur Beeinflussung ihrer Spannwirkung besitzt, und die Materialaussparung durch mehrere in Umfangsrichtung verlaufende, ringförmige Kanäle (9) gebildet wird, die von der Werkzeugaufnahme (3) jeweils durch einen federnden Wandabschnitt (10) abgetrennt sind, welcher auf seiner dem Kanal (9) abgewandten Seite die jeweilige Spannfläche (12) ausbildet, **dadurch gekennzeichnet, dass** die in radialer Richtung gemessene Tiefe des jeweiligen Kanals < 0,1 mm ist.

2. Werkzeughalter (1) mit einer Werkzeugaufnahme (3) zum reibschlüssigen Einspannen eines Werkzeugschafts, wobei die Werkzeugaufnahme (3) aus mindestens einer wendelförmigen Spannfläche (12) besteht, die dazu bestimmt ist, den Werkzeugschaft kraftschlüssig zu halten und die am Innenumfang einer Hülsenpartie (4) ausgebildet ist, wobei die Hülsenpartie (4) eine Materialaussparung zur Beeinflussung ihrer Spannwirkung besitzt, **dadurch gekennzeichnet, dass** die Materialaussparung durch mindestens einen im Wesentlichen in Umfangrichtung entlang einer Schraubenlinie verlaufenden Kanal (9) ausgebildet wird, der von der Werkzeugaufnahme (3) durch einen federnden Wandabschnitt (10) abgetrennt ist, welcher auf seiner dem Kanal (9) abgewandten Seite die jeweilige Spannfläche (12) ausbildet.

3. Werkzeughalter (1) nach einem der vorhergehenden Ansprüche, **dadurch gekennzeichnet, dass** der federnde Wandabschnitt (10) in radialer Richtung dünnwandig ist und vorzugsweise eine Wandstärke < 2 mm, idealerweise < 1 mm besitzt, wobei vorzugsweise zusätzlich die von dem federnden Wandabschnitt (10), welcher den Kanal (9) von der Werkzeugaufnahme (3) abtrennt, überspannte Breite (B1) des Kanals (9) größer ist, idealerweise um mindestens 25%, als die Breite (BS) der Spannfläche (12), die auf dem federnden Wandabschnitt (10) ausgebildet ist, jeweils in Richtung der Längsachse (L) des Werkzeughalters (1) gesehen.

4. Werkzeughalter nach einem der vorhergehenden Ansprüche, **dadurch gekennzeichnet, dass** die in radialer Richtung gemessene Tiefe (T1) des jeweiligen Kanals (9) sehr gering ist, nämlich < 0,075 mm.

5. Werkzeughalter nach einem der vorhergehenden Ansprüche, **dadurch gekennzeichnet, dass** die in Richtung der Rotationsachse (L) gemessene Breite (B1) des jeweiligen Kanals (9) um mindestens den Faktor 10 größer ist als die in radialer Richtung gemessene Tiefe (T1) des Kanals (9).

6. Werkzeughalter nach einem der vorhergehenden Ansprüche, **dadurch gekennzeichnet, dass** die Hülsenpartie (4) zweiteilig ausgeführt ist und aus einem Hülsenabschnitt (5) besteht und einer in dem Hülsenabschnitt (5) festgesetzten Buchse (6), in deren äußere Umfangsfläche eine oder mehrere Nuten (7) eingearbeitet sind, die maßgeblich den oder die besagten Kanäle (9) bildet bzw. bilden.

7. Werkzeughalter nach Anspruch 6, **dadurch gekennzeichnet, dass** die besagten Kanäle (9) vorzugsweise vollständig mit einer Flüssigkeit, vorzugweise Öl, ausgefüllt sind.

8. Werkzeughalter nach Anspruch 6 oder 7, **dadurch gekennzeichnet, dass** die Buchse aus einem hochdämpfenden Metall hergestellt ist.

9. Werkzeughalter nach einem der Ansprüche 6 bis 8, **dadurch gekennzeichnet, dass** die Buchse (6) auf ihrer dem freien Ende des Werkzeughalters (1) zugewandten Stirnseite mit dem Werkzeughalter verschweißt ist, wobei die Buchse (6) vorzugsweise dünnwandig ist und im Idealfall eine Wandstärke (W) < 2,5 mm, besser noch < 1,5 mm besitzt.

10. System mit einem Werkzeughalter gemäß einem der vorhergehenden Ansprüche zum reibschlüssigen Einspannen eines Werkzeugschafts mit unterschiedlichen Einspanncharakteristiken, bestehend aus einer Mehrzahl von identisch ausgestalteten Werkzeughaltergrundkörpern und unterschiedlichen mit den Werkzeughaltergrundkörpern zu verbindenden Buchsen, die sich in Bezug auf die in ihre äußere Umfangsfläche eingearbeiteten den Kanal (9) bildenden Strukturen und/oder die Gestaltung der Spannfläche (12) an ihrer inneren Umfangsfläche unterscheiden.

11. Verwendung des Werkzeughalters gemäß einem der Ansprüche 1 bis 9 mit einer Buchse (6), die an ihrem Außenumfang mehrere in Umfangsrichtung umlaufende, in sich geschlossene erste Nuten (7) oder mindestens eine entlang einer Schraubenlinie in mehreren Windungen um den Außenumfang herum umlaufende erste Nut (7) besitzt, zur Beeinflussung der Einspanncharakteristik eines Werkzeugschafts, indem entweder die Anzahl, der Abstand und/oder die Tiefe (T1) der in sich geschlossenen ersten Nuten (7) so gewählt wird, dass die gewünschte Einspanncharakteristik erreicht wird oder die Anzahl, die Windungszahl, die Steigung und/oder die Tiefe der entlang der Schraubenlinie verlaufenden ersten Nut oder Nuten (7) so gewählt wird, dass sich die gewünschte Einspanncharakteristik erreicht wird.

12. Verwendung nach Anspruch 11, **dadurch gekennzeichnet, dass** die Buchse (6) an ihrem Innenumfang mehrere in Umfangsrichtung umlaufende in sich geschlossene zweite Nuten (11) oder mindestens eine entlang einer Schraubenlinie in mehreren Windungen um den Innenumfang herum umlaufende zweite Nut (11) besitzt, wobei die zweiten Nuten (11) jeweils im Bereich der Zwischenräumen zwischen zwei ersten Nuten (7) angeordnet sind oder die mindestens eine zweite Nut (11) im Bereich des Zwischenraums zwischen zwei Windungen der mindestens einen ersten Nut (7) angeordnet ist.

13. Verwendung nach Anspruch 11 und 12, **dadurch gekennzeichnet, dass** die Tiefe (T1) der ersten Nut oder Nuten (7) so gewählt wird, dass der die Nut überspannende Wandabschnitt (10) gegen den Innenumfang des Hülsenabschnitts (5) zur Anlage kommt, wenn die Betriebskräfte eine bestimmte Größe überschreiten.

14. Verwendung nach Anspruch 11 bis 13, **dadurch gekennzeichnet, dass** die in radialer Richtung gemessene Tiefe (T1) einer ersten Nut < 0,075 mm ist, wobei vorzugsweise zusätzlich gilt, dass die in radialer Richtung gemessene Tiefe (T2) einer zweiten Nut < 1 mm, besser < 0,5 mm und im Idealfall < 0,1 mm ist.

15. Verwendung nach Anspruch 11 bis 14, **dadurch gekennzeichnet, dass** die Buchse (6) aus einem Material gefertigt ist, das eine höhere Dämpfung aufweist als normaler Stahl.

16. Zerspanwerkzeug zur Einspannung in einem Werkzeughalter, **dadurch gekennzeichnet, dass** der Schaft des Zerspanwerkzeugs eine Buchse (6) trägt, die an ihrem Außenumfang mehrere in Umfangsrichtung umlaufende in sich geschlossene erste Nuten (7) besitzt, dass die Buchse (6) auf ihrer inneren Umfangsfläche mehrere ringförmige zweite Nuten (11) trägt, die zwischen sich ringförmige Spannflächen (12) ausbilden, die bestimmungsgemäß gegen den Umfang des Werkzeugschafts anliegen, wobei die zweiten Nuten (11) jeweils im Bereich der Zwischenräume zwischen zwei ersten Nuten (7) angeordnet sind, wobei die in radialer Richtung gemessene Tiefe der ersten Nuten < 0,1 mm ist.

17. Zerspanwerkzeug zur Einspannung in einem Werkzeughalter, **dadurch gekennzeichnet, dass** der Schaft des Zerspanwerkzeugs eine Buchse trägt, die an ihrem Außenumfang mindestens eine entlang einer Schraubenlinie in mehreren Windungen um den Außenumfang herum umlaufende erste Nut (7) besitzt, dass die Buchse (6) auf ihrer inneren Umfangsfläche mindestens eine spiralförmige Nut (7) trägt, die sich mehrfach um die Rotationsachse L herumwindet und die so mindestens eine spiralförmige Spannfläche (12) ausbildet, die bestimmungsgemäß gegen den Umfang des Werkzeugschafts anliegt, wobei die mindestens eine zweite Nut (11) im Bereich des Zwischenraums zwischen zwei Windungen der mindestens einen ersten Nut (7) angeordnet ist.

18. Zerspanwerkzeug nach Anspruch 16 oder 17, **dadurch gekennzeichnet, dass** der maximale Außendurchmesser der Buchse (6) dem Schaftnenndurchmesser des Zerspanwerkzeugs entspricht.

19. Zerspanwerkzeug nach einem der Ansprüche 16 bis 18, **dadurch gekennzeichnet, dass** der Schaft des Zerspanwerkzeugs an seinem den Werkzeugschneiden abgewandten Ende einen Abschnitt mit einem verringerten Außendurchmesser besitzt, auf den die Buchse (6) aufgeschoben ist.

## Claims

1. Tool holder (1) having a tool receptacle (3) for frictionally chucking a tool shank, wherein the tool receptacle (3) consists of a plurality of spaced-apart, annular clamping surfaces (12) which are intended to hold the tool shank in a force-fitting manner and which are formed on the inner circumference of a sleeve part (4), wherein the sleeve part (4) has a material cutout for influencing its clamping action, and the material cutout is formed by a plurality of annular channels (9) which extend in the circumferential direction and which are each separated from the tool receptacle (3) by a resilient wall portion (10) which forms the respective clamping surface (12) on its side facing away from the channel (9), **characterized in that** the depth of the respective channel as measured in the radial direction is < 0.1 mm.

2. Tool holder (1) having a tool receptacle (3) for frictionally chucking a tool shank, wherein the tool receptacle (3) consists of at least one helical clamping surface (12) which is intended to hold the tool shank in a force-fitting manner and which is formed on the inner circumference of a sleeve part (4), wherein the sleeve part (4) has a material cutout for influencing its clamping action, **characterized in that** the material cutout is formed by at least one channel (9) which extends substantially in the circumferential direction along a helical line and which is separated from the tool receptacle (3) by a resilient wall portion (10) which forms the respective clamping surface (12) on its side facing away from the channel (9).

3. Tool holder (1) according to either of the preceding claims, **characterized in that** the resilient wall portion (10) is thin-walled in the radial direction and preferably has a wall thickness of < 2 mm, ideally of < 1 mm, wherein preferably in addition the width (B1) of the channel (9) that is spanned by the resilient wall portion (10) which separates the channel (9) from the tool receptacle (3) is greater, ideally by at least 25%, than the width (BS) of the clamping surface (12) which is formed on the resilient wall portion (10), as seen in each case in the direction of the longitudinal axis (L) of the tool holder (1).

4. Tool holder according to one of the preceding claims, **characterized in that** the depth (T1) of the respective channel (9) as measured in the radial direction is very small, namely < 0.075 mm.

5. Tool holder according to one of the preceding claims, **characterized in that** the width (B1) of the respective channel (9) as measured in the direction of the axis of rotation (L) is greater by at least the factor 10 than the depth (T1) of the channel (9) as measured in the radial direction.

6. Tool holder according to one of the preceding claims, **characterized in that** the sleeve part (4) is of two-part form and consists of a sleeve portion (5) and of a bush (6) which is fixed in the sleeve portion (5) and in whose outer circumferential surface there are incorporated one or more grooves (7) which crucially forms or form the channel (9) or said channels (9).

7. Tool holder according to Claim 6, **characterized in that** said channels (9) are preferably completely filled with a liquid, preferably oil.

8. Tool holder according to Claim 6 or 7, **characterized in that** the bush is produced from a high-damping metal.

9. Tool holder according to one of Claims 6 to 8, **characterized in that**, on its end side facing towards the free end of the tool holder (1), the bush (6) is welded to the tool holder, wherein the bush (6) is preferably thin-walled and in the ideal case has a wall thickness (W) of < 2.5 mm, better still of < 1.5 mm.

10. System having a tool holder according to one of the preceding claims for frictionally chucking a tool shank having different chucking characteristics, consisting of a plurality of identically configured tool holder basic bodies and different bushes which are to be connected to the tool holder basic bodies and which differ in terms of the structures incorporated in their outer circumferential surface and forming the channel (9) and/or the configuration of the clamping surface (12) on their inner circumferential surface.

11. Use of the tool holder according to one of Claims 1 to 9 having a bush (6) which has on its outer circumference a plurality of intrinsically closed first grooves (7) running round in the circumferential direction or at least one first groove (7) running around along a helical line in a plurality of turns around the outer circumference, for influencing the chucking characteristic of a tool shank in that either the number, the spacing and/or the depth (T1) of the intrinsically closed first grooves (7) are/is chosen such that the desired chucking characteristic is achieved, or the number, the number of turns, the pitch and/or the depth of the first groove or grooves (7) extending along the helical line are/is chosen such that the desired chucking characteristic is achieved.

12. Use according to Claim 11, **characterized in that** the bush (6) has on its inner circumference a plurality of intrinsically closed second grooves (11) running around in the circumferential direction or at least one second groove (11) which runs around along a helical line in a plurality of turns around the inner circumference, wherein the second grooves (11) are each arranged in the region of the interspaces between two first grooves (7), or the at least one second groove (11) is arranged in the region of the interspace between two turns of the at least one first groove (7).

13. Use according to Claims 11 and 12, **characterized in that** the depth (T1) of the first groove or grooves (7) is chosen such that the wall portion (10) spanning the groove comes into contact with the inner circumference of the sleeve portion (5) if the operating forces exceed a certain size.

14. Use according to Claims 11 to 13, **characterized in that** the depth (T1) of a first groove as measured in the radial direction is < 0.075 mm, wherein preferably it additionally holds that the depth (T2) of a second groove as measured in the radial direction is < 1 mm, better < 0.5 mm and in the ideal case < 0.1 mm.

15. Use according to Claims 11 to 14, **characterized in that** the bush (6) is produced from a material which has higher damping than normal steel.

16. Machining tool for chucking in a tool holder, **characterized in that** the shank of the machining tool bears a bush (6) which has on its outer circumference a plurality of intrinsically closed first grooves (7) running around in the circumferential direction, **in that** the bush (6) bears on its inner circumferential surface a plurality of annular second grooves (11) which between them form annular clamping surfaces (12) which, as intended, bear against the circumference of the tool shank, wherein the second grooves (11) are each arranged in the region of the interspaces between two first grooves (7), wherein the depth of the first grooves as measured in the radial direction is < 0.1 mm.

17. Machining tool for chucking in a tool holder, **characterized in that** the shank of the machining tool bears a bush which has on its outer circumference at least one first groove (7) which runs around along a helical line in a plurality of turns around the outer circumference, **in that** the bush (6) bears on its inner circumferential surface at least one helical groove (7) which winds multiple times around the axis of rotation L and which thus forms at least one helical clamping surface (12) which bears, as intended, against the circumference of the tool shank, wherein the at least one second groove (11) is arranged in the region of the interspace between two turns of the at least one first groove (7).

18. Machining tool according to Claim 16 or 17, **characterized in that** the maximum outside diameter of the bush (6) corresponds to the nominal shank diameter of the machining tool.

19. Machining tool according to one of Claims 16 to 18, **characterized in that** the shank of the machining tool has, at its end facing away from the tool cutting edges, a portion of reduced outside diameter onto which the bush (6) is pushed.

## Revendications

1. Porte-outil (1) comprenant un logement d'outil (3) pour le serrage par engagement par friction d'un arbre d'outil, le logement d'outil (3) étant constitué de plusieurs surfaces de serrage annulaires (12) espacées les unes des autres qui sont prévues pour retenir l'arbre d'outil par engagement par force et qui sont réalisées au niveau de la périphérie intérieure d'une partie de douille (4), la partie de douille (4) possédant un évidement de matériau pour influencer son effet de serrage et l'évidement de matériau étant formé par plusieurs canaux annulaires (9) s'étendant dans la direction périphérique, qui sont séparés du logement d'outil (3) à chaque fois par une portion de paroi élastique (10) qui constitue, sur son côté opposé au canal (9), la surface de serrage respective (12), **caractérisé en ce que** la profondeur du canal respectif, mesurée dans la direction radiale, est < 0,1 mm.

2. Porte-outil (1) comprenant un logement d'outil (3) pour le serrage par engagement par friction d'un arbre d'outil, le logement d'outil (3) étant constitué d'au moins une surface de serrage de forme hélicoïdale (12) qui est prévue pour retenir l'arbre d'outil par engagement par force et qui est réalisée au niveau de la périphérie intérieure d'une partie de douille (4), la partie de douille (4) possédant un évidement de matériau pour influencer son effet de serrage, **caractérisé en ce que** l'évidement de matériau est formé par au moins un canal (9) s'étendant le long d'une ligne hélicoïdale essentiellement dans la direction périphérique, qui est séparé du logement d'outil (3) par une portion de paroi élastique (10) qui constitue, sur son côté opposé au canal (9), la surface de serrage respective (12) .

3. Porte-outil (1) selon l'une quelconque des revendications précédentes, **caractérisé en ce que** la portion de paroi élastique (10) présente une paroi mince dans la direction radiale et possède de préférence une épaisseur de paroi < 2 mm, idéalement < 1 mm, de préférence en outre la largeur (B1) du canal (9) formée par la portion de paroi élastique (10) qui sépare le canal (9) du logement d'outil (3) étant supérieure, idéalement d'au moins 25 %, à la largeur (BS) de la surface de serrage (12) qui est réalisée sur la portion de paroi élastique (10), à chaque fois vu dans la direction de l'axe longitudinal (L) du porte-outil (1).

4. Porte-outil selon l'une quelconque des revendications précédentes, **caractérisé en ce que** la profondeur (T1), mesurée dans la direction radiale, du canal respectif (9) est très petite, à savoir < 0,075 mm.

5. Porte-outil selon l'une quelconque des revendications précédentes, **caractérisé en ce que** la largeur (B1) du canal respectif (9), mesurée dans la direction de l'axe de rotation (L), est supérieure d'au moins un facteur 10 à la profondeur (T1) du canal (9) mesurée dans la direction radiale.

6. Porte-outil selon l'une quelconque des revendications précédentes, **caractérisé en ce que** la partie de douille (4) est réalisée en deux parties et se compose d'une portion de douille (5) et d'un manchon (6) fixé dans la portion de douille (5), dans la surface périphérique extérieure duquel sont incorporées une ou plusieurs rainures (7) qui forment essentiellement ledit ou lesdits canaux (9).

7. Porte-outil selon la revendication 6, **caractérisé en ce que** lesdits canaux (9) sont de préférence complètement remplis de liquide, de préférence d'huile.

8. Porte-outil selon la revendication 6 ou 7, **caractérisé en ce que** le manchon est fabriqué en métal à fort effet d'amortissement.

9. Porte-outil selon l'une quelconque des revendications 6 à 8, **caractérisé en ce que** le manchon (6) est soudé au porte-outil sur son côté frontal tourné vers l'extrémité libre du porte-outil (1), le manchon (6) étant de préférence à paroi mince et dans un cas idéal possédant une épaisseur de paroi (W) < 2,5 mm, préférablement < 1,5 mm.

10. Système comprenant un porte-outil selon l'une quelconque des revendications précédentes pour le serrage par engagement par friction d'un arbre d'outil avec différentes caractéristiques de serrage, constitué d'une pluralité de corps de base de porte-outil réalisés de manière identique et de différents manchons devant être reliés aux corps de base de porte-outil, lesquels se distinguent en termes de leur structure formant le canal (9) incorporé dans leur surface périphérique extérieure et/ou en termes de la configuration de la surface de serrage (12) au niveau de leur surface périphérique intérieure.

11. Utilisation du porte-outil selon l'une quelconque des revendications 1 à 9 avec un manchon (6) qui possède, au niveau de sa périphérie extérieure, plusieurs premières rainures (7) fermées sur elles-mêmes, s'étendant sur la périphérie dans la direction périphérique ou au moins une première rainure (7) s'étendant sur la périphérie autour de la périphérie extérieure en plusieurs spires le long d'une ligne hélicoïdale pour influencer la caractéristique de serrage d'un arbre d'outil, par le fait que soit le nombre, la distance et/ou la profondeur (T1) des premières rainures (7) fermées sur elles-mêmes sont choisis de telle sorte que la caractéristique de serrage souhaitée soit atteinte, soit le nombre, le nombre de spires, le pas et/ou la profondeur de la première rainure ou des premières rainures (7) s'étendant le long de la ligne hélicoïdale sont choisis de telle sorte que la caractéristique de serrage souhaitée soit atteinte.

12. Utilisation selon la revendication 11, **caractérisée en ce que** le manchon (6) possède, au niveau de sa périphérie intérieure, plusieurs deuxièmes rainures (11) fermées sur elles-mêmes, s'étendant sur la périphérie dans la direction périphérique ou au moins une deuxième rainure (11) s'étendant sur la périphérie autour de la périphérie intérieure en plusieurs spires le long d'une ligne hélicoïdale, les deuxièmes rainures (11) étant disposées à chaque fois dans la région des espaces intermédiaires entre deux premières rainures (7) ou l'au moins une deuxième rainure (11) étant disposée dans la région de l'espace intermédiaire entre deux spires de l'au moins une première rainure (7).

13. Utilisation selon la revendication 11 ou 12, **caractérisée en ce que** la profondeur (T1) de la première rainure ou des rainures (7) est choisie de telle sorte que la portion de paroi (10) couvrant la rainure vienne en appui contre la périphérie intérieure de la portion de douille (5) lorsque les forces de fonctionnement dépassent une grandeur déterminée.

14. Utilisation selon les revendications 11 à 13, **caractérisée en ce que** la profondeur (T1), mesurée dans la direction radiale, d'une première rainure est < 0,075 mm, de préférence en outre la profondeur (T2), mesurée dans la direction radiale, d'une deuxième rainure étant < 1 mm, de préférence < 0,5 mm et dans un cas idéal < 0,1 mm.

15. Utilisation selon les revendications 11 à 14, **caractérisée en ce que** le manchon (6) est fabriqué en un matériau qui présente un plus grand amortissement que de l'acier normal.

16. Outil d'enlèvement de copeaux devant être serré dans un porte-outil, **caractérisé en ce que** l'arbre de l'outil d'enlèvement de copeaux porte un manchon (6) qui possède, au niveau de sa périphérie extérieure, plusieurs premières rainures (7) fermées sur elles-mêmes, s'étendant sur la périphérie dans la direction périphérique, **en ce que** le manchon (6) porte, sur sa surface périphérique intérieure, plusieurs deuxièmes rainures annulaires (11) qui constituent entre elles des surfaces de serrage annulaires (12) qui s'appliquent de manière conforme contre la périphérie de l'arbre d'outil, les deuxièmes rainures (11) étant à chaque fois disposées dans la région des espaces intermédiaires entre deux premières rainures (7), la profondeur, mesurée dans la direction radiale, des premières rainures étant < 0,1 mm.

17. Outil d'enlèvement de copeaux devant être serré dans un porte-outil, **caractérisé en ce que** l'arbre de l'outil d'enlèvement de copeaux porte un manchon qui possède, au niveau de sa périphérie extérieure, au moins une première rainure (7) s'étendant sur la périphérie autour de la périphérie extérieure en plusieurs spires le long d'une ligne hélicoïdale, **en ce que** le manchon (6) porte, sur sa surface périphérique intérieure, au moins une rainure en forme de spirale (7) qui s'enroule plusieurs fois autour de l'axe de rotation L et qui constitue ainsi au moins une surface de serrage en forme de spirale (12) qui s'applique de manière conforme contre la périphérie de l'arbre d'outil, l'au moins une deuxième rainure (11) étant disposée dans la région de l'espace intermédiaire entre deux spires de l'au moins une première rainure (7).

18. Outil d'enlèvement de copeaux selon la revendication 16 ou 17, **caractérisé en ce que** le diamètre extérieur maximal du manchon (6) correspond au diamètre nominal de l'arbre de l'outil d'enlèvement de copeaux.

19. Outil d'enlèvement de copeaux selon l'une quelconque des revendications 16 à 18, **caractérisé en ce que** l'arbre de l'outil d'enlèvement de copeaux possède au niveau de son extrémité opposée aux tranchants de l'outil une portion de diamètre extérieur réduit sur laquelle est enfoncé le manchon (6).
